(19) Europäisches Patentamt
European Patent Office
Office européen des brevets

(11) Publication number : **0 332 456 B1**

# (12) EUROPEAN PATENT SPECIFICATION

(45) Date of publication of patent specification : **20.09.95 Bulletin 95/38**

(51) Int. Cl.$^6$ : **G02F 1/137,** C09K 19/20

(21) Application number : **89302379.6**

(22) Date of filing : **10.03.89**

## (54) Light modulation element.

(30) Priority : **10.03.88 JP 56694/88**

(43) Date of publication of application : **13.09.89 Bulletin 89/37**

(45) Publication of the grant of the patent : **20.09.95 Bulletin 95/38**

(84) Designated Contracting States : **AT BE CH DE ES FR GB GR IT LI LU NL SE**

(56) References cited :
**US-A- 4 712 875**
**APPLIED PHYSICS LETTERS, vol. 51, no. 9, 31st August 1987, pages 640-642, American Institute of Physics, New York, US; G. ANDERSSON et al.: "Submicrosecond electro-optic switching in the liquid-crystal smectic A phase: The soft-mode ferroelectric effect"**
**PATENT ABSTRACTS OF JAPAN, vol. 11, no. 260 (P-608)[2707], 22nd August 1987 ; & JP-A-62 63 919**

(73) Proprietor : **MITSUI PETROCHEMICAL INDUSTRIES, LTD.**
**2-5, Kasumigaseki 3-chome**
**Chiyoda-ku**
**Tokyo 100 (JP)**

(72) Inventor : **Nishiyama, Shinichi**
**Mitsui Petrochem. Ind., Ltd.**
**3 Chigusa-Kaigan**
**Ichihara-shi Chiba (JP)**
Inventor : **Yamaoka, Hideo**
**Mitsui Petrochem. Ind., Ltd.**
**3 Chigusa-Kaigan**
**Ichihara-shi Chiba (JP)**
Inventor : **Yamanaka, Tooru**
**Mitsui Petrochem. Ind., Ltd.**
**3 Chigusa-Kaigan**
**Ichihara-shi Chiba (JP)**

(74) Representative : **Cresswell, Thomas Anthony et al**
**J.A. KEMP & CO.**
**14 South Square**
**Gray's Inn**
**London WC1R 5LX (GB)**

EP 0 332 456 B1

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Jouve, 18, rue Saint-Denis, 75001 PARIS

## Description

This invention relates to a light modulation element comprising a liquid crystal assuming a smectic A phase, and more particularly to an element which regulates the amount of transmitted light by applying an electric field or a magnetic field to a liquid crystal material containing a liquid crystal assuming a smectic A phase.

Various types of light modulation element using ferroelectric liquid crystals have been proposed in the past.

As a method for driving such light modulation elements, there is known a method wherein a thin film of a ferroelectric liquid crystal is placed between two sheets of polarizing plates whose polarizing directions fall at right angles with each other and the modulation of light is conducted by utilizing birefringence of the ferroelectric liquid crystals [see, Appl,phys. Lett., vol.36, page 899 (1980)]. The ferroelectric liquid crystal has a layer structure in the chiral smectic C phase thereof and is oriented so that the major axis of the molecules forms approximately a given angle θ (referred to as the tilt angle) within said layer. Further, the ferroelectric liquid crystals form a helical structure where the direction of the major axis of the liquid crystal material gradually changes as transmitted light travels through the liquid crystal layer (Fig.1).

When the ferroelectric liquid crystal material is charged into a liquid crystal cell having a gap of about 2 μm, said ferroelectric liquid crystal material is affected by the substrates of the cell and oriented so as to be parallel to the substrates. Accordingly, two kinds of orientation direction are possible (Fig.2).

When an electric field is applied to an initially oriented liquid crystal material, the major axis of the molecules is oriented in one direction by an interaction between the spontaneous polarization of the liquid crystal material and the electric field (Fig.3a). Further, when an electric field in the opposite direction is applied to the liquid crystal material which has been oriented in one direction, said liquid crystal material is then oriented in a stable direction which is different from the above direction (Fig.3b).

A light modulation element can be formed by combining the thus-orientated liquid crystal material with polarizing plates. When the angle formed by the direction of the oriented molecules of the liquid crystal material and the direction of the polarizing axis of the polarizing plate is zero, the amount of light transmitted through the element is at a minimum, while when the angle θ is 45 degrees, the amount of transmitted light becomes maximum. Accordingly, modulation of light becomes possible by arranging the polarizing plates so that an appropriate angle θ may be formed.

Light modulation elements utilizing the birefringence of the ferroelectric liquid crystal have advantages such as (1) power consumption is low; (2) a high-speed respose is provided; (3) a memory state can be kept; and (4) the threshold voltage is steep and low, as compared with conventional liquid crystal elements. Therefore, ferroelectric liquid crystals are promising in the field of light modulation elements particularly display devices. However, such light modulation elements have not yet been put to practical use. This is because ① it is difficult to prepare a thin-film element having a uniform thickness; ② it is difficult to control a uniform, identifiable orientation state with good reproducibility; ③ the orientation state of the liquid crystal material has poor resistance to mechanical shock; ④ there is difficulty in displaying gradation, etc. Further, with regard to obtaining memory states which is an advantage of the element, there is much difficulty in realizing two uniform memory states only by the interaction between molecules of the liquid crystal material and surface of the substrate.

There has been proposed a guest-host type light modulation element wherein light modulation is conducted by mixing a ferroelectric liquid crystal with a dichroic dye and utilizing the light absorption of the dye [see, "High-Speed Liquid Crystal Technique", written by Katsumi YOSHINO, published by CMC (1986)].

In this element light, modulation is conducted by utilizing the effect that when the orientating direction of the liquid crystal material is changed according to the electric field, the direction of the dye is also changed according to the change thereof (Fig.4). The amount of transmitted light can be controlled with one polarizing sheet by utilizing the dichroism of the dye.

However, the initial orientation of the liquid crystal material must be good as in the case of the method utilizing birefringence. Hence, it is difficult to control orientation as in the method utilizing birefringence. Further, since a dye is used, it is necessary that the element has a certain thickness (several μm) to obtain sufficient contrast, and this makes it even more difficult to control orientation utilizing the orientating force on the surface of the substrate. In addition thereto, the display method wherein the chiral smectic C phase is used has problems such that ① it is difficult to orient uniformly the liquid crystal material with good reproducibility; ② the orientation state is liable to be broken by mechanical shock; and ③ there is difficulty in displaying gradation, as in the method utilizing double birefringence.

Liquid crystals exhibit a phase change from a solid state through a liquid crystal state to a liquid state with change of temperature. It is known that many phase states exist in the liquid crystal phase (see, "Newest Technique of Liquid Crystal", written by Shoichi MATSUMOTO and Ichiyoshi TSUNODA, published by Kogyo Chosakai Publishing Co., Ltd. 1983).

For example, when a ferroelectric liquid crystal is used in a light modulation element, the ferroelectric liquid crystal is interposed between two transparent substrates opposed to each other, each of the substrates being provided with an electrode. Two polarizing plates whose polarizing directions fall at right angles to each other are placed outside the transparent substrates. The temperature is changed, whereby the ferroelectric liquid crystal is kept in the chiral smectic C phase. When an electric field is applied thereto, the direction of the major axis of the molecules is changed and thus modulation of light can be conducted.

It is necessary to bring the ferroelectric liquid crystal into a good initial orientation when a ferroelectric liquid crystal is used in a light modulation element as described above. Making the initial orientated of the liquid crystal material good is an important factor in obtaining a light modulation element having excellent characteristics. As methods for initial orientation of ferroelectric liquid crystals, a temperature gradient method and a surface treatment method are known. (see, "High-Speed Liquid Crystal Technique", written by Katsumi YOSHINO, published by CMC publishing, 1986).

The temperature gradient method comprises gradually lowering the temperature around the liquid crystal material to cause epitaxial growth of the liquid crystal material from the spacer edge.

The surface orientating method comprises orienting molecules of the liquid crystal by utilizing an orientation-controlling film deposited on the surface of the substrate, e.g. by coating or deposition.

In many cases, to oriente the liquid crystal material, the liquid crystal material is heated at high temperatures to a liquid state and the temperature is then lowered.

When the liquid crystal material is oriented by lowering the temperature from the liquid state as described above, a chiral smectic C phase among the various liquid crystal phases can appear immediately, but usually the chiral smectic C layer appears via other liquid phases.

Each phase appears from high temperature toward low temperature according to thermodynamic stability.

Liquid state → chiral nematic phase → smectic A phase→chiral smectic C phase.

Liquid state → chiral nematic phase → chiral smectic C phase.

Liquid state → chiral smectic C phase.

Generally, ferroelectric liquid crystal materials can be used in light modulation elements by utilizing the phenomenon whereby the direction of the major axis of the oriented molecules of the ferroelectric liquid crystal material is changed by an electric field, etc., in the temperature range wherein the ferroelectric liquid crystal assumes the chiral smectic C phase.

For example, it is reported that the compound DOBAMBC represented by the following formula

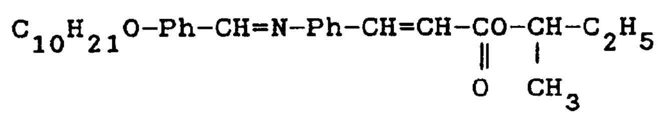

assumes the chiral smectic C phase in a temperature range of 63 to 92°C and the direction of the major axis of the oriented molecules can be changed by an electric field, etc. in said temperature range [see, R.B.Meyer et al., J.de.Phys., vol.36, page L-69(1975)].

However, it is very difficult to control initial orientation in the chiral smectic C phase and to keep the orientated state as described above. This fact has been the most serious problem for practical use.

The present invention seeks to solve the problems associated with the prior art such as those mentioned above. An object of the invention is to provide a light modulation element having excellent characteristics such as ① the initial orientation of the liquid crystal can be easily made; ② an extremely thin film of a liquid crystal is not required; ③ the oriented state of the liquid crystal material is not liable to mechanical shock; and ④ gradation can be provided.

The invention provides a light modulation element which comprises a liquid crystal element, the said liquid crystal element comprising a cell composed of two transparent substrates, each substrate being provided with a transparent electrode on one surface, and a liquid crystal material assuming a smectic A phase, the said substrates being arranged so that the transparent electrodes are opposed to each other and separated by a space of from 1 to 5 μm which is filled with the said liquid crystal material, the said liquid crystal material being of formula (Ia)

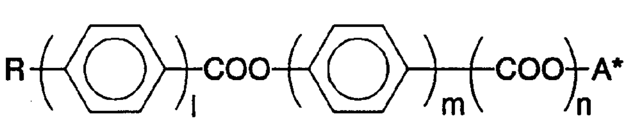

( Ia )

wherein R is alkyl, alkoxy or haloalkyl,

l is 1 or 2,

m is 0, 1 or 2,

n is 0, 1 or 2 and

A* is a group having an optically active asymmetric carbon of formula

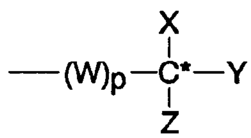

wherein X, Y and Z are different from each other and are selected from halogen, hydrogen and alkyl, W is alkylene, and p is 0 or 1, or of formula (Ic)

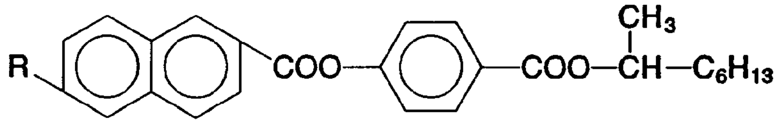 (Ic)

wherein R is $C_{10}H_{21}O$- or $C_{10}H_{21}$-.

A polarizing plate is generally placed outside at least one of the transparent substrates.

The light modulation element (129) according to the invention may comprise two liquid crystal elements (128) and two polarizing plates (121), the polarizing plates being arranged such that their polarizing directions are mutually perpendicular or parallel, and the two liquid crystal elements being arranged side by side between said polarizing plates (121) and being sealed with a sealing material, and wherein the retardation of light transmitted through said two liquid crystal elements is from 0.13 to 0.26 μm. Fig.12 illustrates such a light modulation element.

The light modulation element according to the invention may comprise a polarizing plate (131), a reflective layer (137) which reflects at least visible light and a liquid crystal element, wherein the liquid crystal element is interposed between said polarizing plate (131) and said reflective layer (137). Such an element is illustrated in Fig.13.

In the light modulation element according to the invention, one or both of the transparent electrodes may be provided with a thin organic or inorganic film having the potential to orientate the liquid crystal material. Preferably, in such a light modulation element, the cell is sealed with a sealing material and each of the transparent substrates is provided on one surface with a transparent electrode and an orientation-controlling layer in that order, the said orientation-controlling layer comprising a film of an organic high polymer having a beta-dispersion temperature not lower than the curing temperature of the said sealing material. Fig.15 illustrates such a light modulation element.

The light modulation element according to the invention may comprise two polarizing plates arranged such that their polarizing directions are mutually parallel or perpendicular, wherein each of the transparent substrates is provided on one surface with a transparent electrode and a ferroelectric layer in that order, and the liquid crystal element is sealed with a sealing material. Such an element is illustrated in Fig.16.

In the light modulation element according to the invention, at least one of the two substrates may be of a flexible material. Fig.7 illustrates such a light modulation element. In such a light modulation element, the or each flexible substrates preferably satisfies the following relation:

$$a^4/Et^3 < 0.32$$

wherein t is the thickness in mm of the flexible substrate, E is the modulus in $Kgf/m^2$ thereof and a is the width in mm of the space between the two substrates. Fig.7 illustrates such an element.

In the light modulation element according to the invention, the liquid crystal material may be initially oriented by heating the material contained in said cell to a temperature near the upper limit for the material to assume a smectic A phase, and applying a DC bias voltage to the material thus heated. Such an element is illustrated in Fig.7.

In the light modulation element according to the invention, one of the transparent substrates may be provided with a non-linear element or an active element. Fig.11 illustrates such a light modulation element.

## BRIEF DESCRIPTION OF THE DRAWINGS

Fig.1 illustrates that the major axis of each molecule of a ferroelectric liquid crystal is inclined at a tilt angle to the vertical direction Z in a smectic phase and the angle of incline is rotated by a given angle for every phase to thereby form a helical structure.

Fig.2 illustrates a state where two directions of orientation are possible in a conventional thin-film element.

Fig.3(a) and 3(b) illustrate light switching in a conventional thin-film element.

Fig.4 illustrates a conventional host-guest type light switching element.

Fig.5 and 6 are schematic views illustrating a modulation method used according to the invention.

Fig.7 is a cross-sectional view illustrating an embodiment of an element according to the present invention.

Fig.8 is a graph showing an example of the change in the amount of transmitted light with a change in the applied voltage.

Fig.9 is a graph showing an example of the temperature dependence of the induced tilt angle of MHPOBC.

Fig.10 shows a substrate having a member serving an adhesive as well as a spacer having eight notches, which is used in Example 5.

Fig.11-(a) is a cross-sectional view of a liquid crystal display and a thin film transistor and Fig.11-(b) is a plane view of a picture element electrode containing a thin film transistor.

Fig.12 is a cross-sectional view of a light modulation element according to the invention having two liquid crystal elements.

Fig.13 is a cross-sectional view of a light modulation element according to the invention having a reflective layer.

Fig.14 is a cross-sectional view of a light modulation element according to the invention having a spacer formed by fibers.

Fig.15(a) is a plan view of a light modulation element according to the invention having a rectangular spacer with an inlet for a liquid crystal material sealed with a sealing material; and Fig.15(b) is a cross-sectional view of the element shown in Fig.15(a) along the line A-A.

Fig.16 is a cross-sectional view of a light modulation element according to the invention having a ferroelectric layer on one of the transparent electrodes.

Fig.17(a) is a plan view of a light modulation element according to the invention having concentric O-ring spacers; and Fig.17(b) is a cross-sectional view of the element shown in Fig.17(a) along the line A-A.

Fig.18(a) is a plan view of a light modulation element according to the invention having comb-shaped spacers; and Fig.18(b) is a cross-sectional view of the element shown in Fig.18(a) along the line A-A.

The light modulation element of the invention will now be described in more detail.

As the transparent substrates used in the invention, there can be used glass sheets and sheets of polymer materials.

When glass substrates are used, an undercoat layer mainly composed of, for example, silicon oxide can be provided on the surfaces of the glass substrates to prevent the liquid crystal material from being deteriorated by alkali components dissolved out from the glass.

The thickness of the transparent substrate is generally 0.01 to 1.0 mm, when glass substrates are used.

A flexible transparent substrate can be used, such as a film of polymer material.

A transparent electrode is provided on one surface of each substrate. The transparent electrode can be formed, for example, by coating the surface of the transparent substrate with indium tin oxide (ITO). The transparent electrode can be formed by any conventional methods. The thickness of the transparent electrode is generally 10 to 200 nm (100 to 2000 Å).

On the transparent electrodes provided on the transparent substrates, there may be provided an orientating layer or a ferroelectric layer. For example, the orientating layer may be an organic or inorganic film to which the ability to orientate the liquid crystal has been imparted.

Examples of the thin organic film include thin films of polymer material such as polyethylene, polypropylene, polyester, nylon, poval and polyimides. The thin films can be formed by polymerization (plasma polymerization) on the substrates, coating or adhesion. Further, the thin organic films can be formed by chemically absorbing organic silane coupling agents or carboxylic acid polynuclear complexes.

Examples of the inorganic thin film include thin films of oxides such as silicon oxide, germanium oxide and alumina, nitrides such as silicon nitride and other semiconductors. The inorganic films can be formed by deposition or sputtering.

Examples of methods for imparting to the thin films the ability to orientate the liquid crystal include methods for imparting anisotropy or shape specificity to the thin films during their formation and methods for imparting characteristics from external sources to the thin films after their manufacture. Concrete examples of the methods include preparation of oriented films of polymer materials, oblique deposition of silicon oxide and rubbing

of the surface of polyimide films.

The orientation-controlling layer can, for example, be formed by chemically adsorbing an organic silane coupling agent or a carboxylic acid polynuclear complex or by subjecting silicon oxide to oblique metallization. Alternatively, the orientation-controling layer can be formed by coating the surface of the transparent electrode with a polyimide resin and then rubbing it in a given direction. The orientation-controlling layer may be formed so that it serves as a spacer described hereinafter.

Two sheets of the above-descdribed transparent substrates are so arranged that the transparent electrodes are opposed to each other and a space for charging the liquid crystal material is formed between said substrates.

The width of the space is from 1 to 5 μm, preferably from 1 to 3 μm. The space can be formed, for example, by putting a spacer between two sheets of the substrates.

As the spacer, there can be used polyimide type polymer materials obtained by pattering photosensitive polyimide precursors. When such a spacer is used, monodomains can be formed by an interfacial effect between the spacer and the liquid crystal material. It is frequently advisable to use a spacer which also acts as an orientation controlling layer thereby omitting the use of any particular orientation controlling layer. The spacer may be in the form of concentric O-rings or a comb-shaped spacer acting as the orientation controlling film. Further, there can be used a spacer having a plurality of notches for charging the liquid crystal material into the cell.

In addition to the spacer, fibers may be used with the liquid crystal material, whereby a space can be formed between the substrates by the existence of the fibers.

It is preferrerd that the fibers satisfy the following relationship between their average diameter and average length

$$3 \leqq \frac{\ell}{d} \leqq 100$$

wherein d is the diameter of the fiber and $\ell$ is the average length of the fibers.

Examples of the fiber include fibers obtained by spinning alkali glass.

The width of the space formed by the substrates can be kept uniform by the fibers. A particulate material may be used together with the fibers. Examples of the particulate material include particles having a particle diameter of from 1 to 5 μm of melamine resin, urea resin or benzoguanamine resin.

The cell is generally sealed with a sealing material.

Examples of the sealing material include epoxy resins, silicone resins, acrylic-modified epoxy resins and silicone rubber-modified epoxy resins.

It is preferred that sealing is conducted using resins capable of curing at a temperature at or below the β-dispersion temperature of any polymer material film used as an orientation controlling layer.

The space of the liquid crystal cell having the above-described constitution is charged with the liquid crystal material. The liquid crystal materials which can be used in the present invention assume smectic A phase. Namely, the liquid crystal materials form a layer structure with the major axis of the molecules parallel to the normal direction of said layer.

When oriented liquid crystal materials assuming smectic A phase are examined with a polarizing microscope, there can not be observed a linear fan-form, a turbulent fan-form, marble or schlieren micro-structures which can be observed in the chiral smectic C phase, but there can be observed a short stick-form, a simple fan-form and simple polygonal micro-structures peculiar to the smectic A phase.

The smectic A phase has a layer structure and the major axis of the molecules is parallel to the normal line of the layer. When an external field such as an electric field is applied thereto, the dipoles of the molecules become uniform by free rotation round their major axes. When the direction of the major axis of the molecules and the direction of the dipole become uniform (Fig.5), the potential energy of the whole system is increased and the system becomes unstable. Therefore, a reduction in potential energy is caused, and the system is stabilized at a position where the major axis of the molecules is inclined at a certain tilt angle to the normal line of the layer (Fig.6). Thus, the tilt angle θ′ induced by an external field such as an electric field is not zero (θ′ ≠ 0). This is reported in physical Review Letters vol.38, page 848 (1977), written by S.Garoff et al.

The liquid crystal material assuming smectic A phase is charged into the liquid crystal cell formed by the two sheets of the transparent substrates which are opposed to each other and provided with the electrodes. The liquid cell may be placed between two sheets of polarizing plates whose polarizing directions fall at right angles to each other.

The temperature is adjusted to keep the liquid crystal in the smetic A phase. When an electric field is applied thereto, the orientation direction of the major axis of the molecules of the liquid crystal material changes and light transmission therefore changes so that light modulation can be carried out.

In a liquid crystal material of formula (Ia), m is preferably 1 or 2 and n is preferably 1 or 2. More preferably,

R is alkyl having not more than 20 carbon atoms, m is 1, n is 1, p is 0, and X, Y and Z are different atoms or groups.

Preferred examples of groups having an optically active center include the following groups:

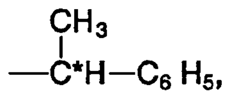, 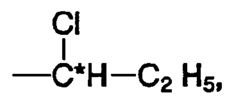,

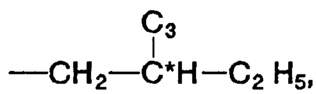, 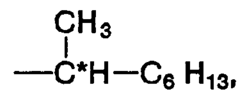,

and

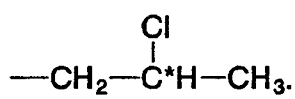.

Groups having an optically active center at a position near PhPh-COO-Ph-COO- are particularly preferred.

An example of a preferred liquid crystal material which can be used in the present invention is

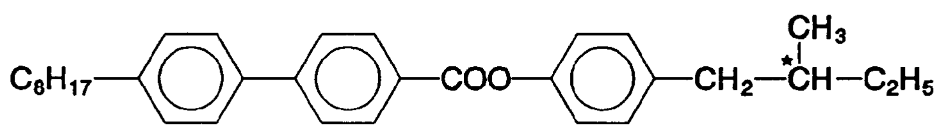

In the present invention, liquid crystal compounds assuming a smectic A phase may be used either alone or in a combination of two or more of them.

The liquid crystal materials assuming smectic A phase, which are charged into the space of the liquid crystal cell, can be oriented, for example, by monoaxial orientation controlling methods such as a surface treatment method using an orientation controlling film or the temperature gradient method utilizing a spacer edge. It is preferred that the initial orientation of the liquid crystal material is conducted by keeping the liquid crystal cell at a temperature near the upper limit for the smectic A phase and imposing an electric field with a DC bias voltage.

Usually, the liquid crystal cell which has been charged with the liquid crystal and subjected to the initial orientation is then placed between two sheets of polarizing plates. Said two polarizing plates are arranged so that their polarizing directions are at right angles to or parallel to each other.

As the polarizing plates, there can be used polarizing films having a polarizing property imparted thereto by an orientating resin film such as a polyvinyl alcohol resin film or a polyvinyl butyral resin film, in the presence of iodine to allow iodine to be absorbed by the films. The surface of the polarizing film may be coated with another resin to form a multi-layer structure.

Figure 7 shows an embodiment of the light modulation element of the invention wherein two polarizing plates as described above are arranged. In Fig. 7, numeral 1 represents polarizing plates whose polarizing direction fall at right angles to each other, 2 represents transparent substrates, 3 represents transparent electrodes, 4 represents spacers for controlling the thickness of the element, and 5 represents a liquid crystal material assuming a smectic A phase.

One of the polarizing plates may be a reflecting layer for reflecting light at least in the visible region.

Two liquid crystal elements may be placed in side by side relation between two the polarizing plates so that the value of the retardation of transmitted light is from 0.13 to 0.26 μm. In this case, a substrate of one element and an adjacent substrate of another may be integrated.

Generally, when a ferroelectric liquid crystal is homogeneously oriented, the induced tilt angle θ′ is ap-

proxiamtely zero, even when an electric field is applied thereto in the temperature range of smectic A phase. However, with a compound such as MHPOBC (4'-(1-metylheptyloxy carbonyl)phenyl-4-octyloxy biphenyl-4-carboxylate), said θ' becomes ten-odd degrees. The θ' value is in the range of values for liquid crystal materials which can be used for light modulation elements. Accordingly, modulation of light can be carried out, when compounds such as the above compound are homogeneously oriented and an electric field is applied to the cell placed between the polarizing plates in the temperature range of smectic A phase.

The amount of transmitted light is changed when voltage is imposed to such a light modulation element. Fig. 8 shows an example of the change in the amount of transmitted light in a light modulation element using MHPOBC. In this example, an analyzer is so arranged that the direction of the analyzer accords with the orientation direction when the electric field is negative and the direction of the major axis of the molecules is changed. Accordingly, the intensity of transmitted light is at the minimum when field strength becomes negative. Fig. 8 also shows the orientation direction of the molecules within the element. It can be understood from Fig. 8 that modulation of light is effectively carried out. It can also be understood that gradation can be easily obtained from the relationship between field strength and amount of transmitted light.

For driving light modulation elements with an electric field, matrix driving which has heretofore been practiced with display devices wherein nematic liquid crystal materials are employed poses various problems. Among others, the most serious problem is a phenomenon called "cross talk", that is, when an electric field is imposed on a picture or image display element, the electric field is to a certain extent imposed on picture or image elements which are in the vicinity of the intended display element. To overcome such an undesirable phenomenon , a non-linear element or an active element may be advantageously employed in the light modulation elements according to the invention for the purpose of independently driving individual picture or image elements with an electric field. More specifically, for example, the non-linear resistance characteristics of e.g. varistors, MIMs (Metal Insulator Metals) and diodes can be utilized as non-linear elements having two-terminal elements.

Examples of active elements having three-terminal elements include TFTs (thin film transistors), Si-MOS's (Si-metal oxide semi conductor field-effect transistors) and SOS's (Silicon on Spphiers).

Further, orientation can be controlled very simply as compared with the chiral smectic C phase, because the direction of the major axis of molecules in the smectic A phase is regulated only in one direction.

The orientation of the smectic A phase can be made in a short time. Accordingly, a light modulation element using a liquid crystal exhibiting the smectic A phase can be manufactured in a similar manner to that for the production of liquid crystal display elements using conventional nematic liquid crystal materials.

When a liquid crystal material assuming the chiral smectic C phase is charged into a space of about 2 μm, there stably exist two kinds of direction of the major axis of the molecules. Accordingly, the equilibrium of the stable state is lost when monoaxial orientation regulation is conducted. There is a problem that good initial orientation can not be obtained when biaxial orientation regulation is conducted in order to keep the equilibrium of the stable state of two kinds of direction. On the other hand, when modulation of light is conducted with the smectic A phase, good initial orientation can be made by monoaxial orientation. Further, equal switching can be made by the application of negative and positive electric fields.

Usually, the light transducing rate in the temperature range of the smectic A phase is about 1 μ second and response can be made at a very high speed.

In addition to the exemplified liquid crystal compounds assuming the smectic A phase, liquid crystal compounds assuming no ferroelectric property can be conjointly used in present invention. Further, dyes may be mixed with the liquid crystal compositions assuming the smectic A phase. In this case, methods utilizing light absorption of the dyes are considered as display methods. Namely, display methods in a host-guest system using one sheet of the polarizing plate are considered.

The present invention is further illustrated by the following Examples without limiting the invention thereto.

<u>Example 1</u>

A liquid crystal compound having the following formula was charged into a space of a liquid crystal cell having a spacer of 3.6 μm in thickness. The cell was interposed between two polarizing plates so arranged that the polarizing directions thereof were at right angles to each other.

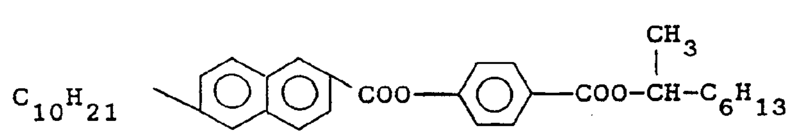

The liquid crystal compound exhibited smectic A phase at a temperature of not higher than 60°C.

After the liquid crystal material was charged into the liquid crystal cell, the cell was heated to 60 °C to bring the liquid crystal compound into a liquid. The cell was gradually cooled at a cooling rate of about 5 °C/hr (a temperature gradient method). There was obtained a good initial orientation. Induced tilt (change in the orientation direction of the major axis of the molecule) could be observed upon applying an electric field thereto. Fig. 9 shows the temperature dependence of induced tilt θ', At 45 °C, there were obtained a light (ON) state at +30 V and a dark (OFF) state at -30V. The contrast of brightness of the light state and the dark state was 22 times or higher. Optical response speed at 45°C was 20 μ seconds.

There could be provided a light modulation element having a good initial orientation and a high response speed when this element was used.

Example 2

A polyimide (PIQ-5400, a product of Hitachi Kasei Kogyo KK) was dissolved in N-methyl-pyrrolidone to prepare a coating solution having a polyimide content of 1.2 %.

A surface of ITO transparent electrode provided on one surface of a glass substrate was coated with the coating solution at a rotational speed of 2000 rpm by means of spin coating method.

The coated glass substrate was heated at 325 °C for 30 minutes to cure the polyimide, thus forming a polyimide film of 150 to 200 Å in thickness.

The surface of the polyimide film was rubbed with nylon cloth in one direction to impart a property for orientating a liquid crystal material to the polyimide film.

In this way, two sheets of the substrates were prepared.

Separately, an epoxy resin (LCB-304B, manufactured by EHC) was mixed with a curing agent (LCB-310B, manufactured by EHC) in a ratio of 138:30 by weight to prepare an epoxy resin adhesive.

The epoxy resin adhesive was applied to peripheral parts of one of the substrates having the ITO and polyimide films formed thereon (applied to the surfaces of the polyimide film) by means of silk screen printing to form adhesive portions on the peripheral part of the substrate.

Separately, finely divided fiber (GP-20, manufactured by EHC) was dispersed in Freon in such an amount as to give 1 wt.% fiber. There was obtained a spacer dispersion. The fiber had the value of ℓ/d = about 10 wherein d was the diameter and ℓ was the length.

The spacer dispersion was sprayed on the surface of the substrate, on which the adhesive portion was formed. Two sheets of the substrates were so arranged that the polyimide films were opposed to each other. They were heated at 50 °C for 15 minutes, at 60 °C for 15 minutes, at 70 °C for 15 minutes, at 80 °C for 15 minutes, at 125 °C for 30 minutes, at 170 °C for 60 minutes to effect bonding, thus preparing a liquid crystal cell. The resulting liquid crystal cell had a space of about 2 m.

The liquid crystal cell was interposed between two polarizing plates so arranged that polarizing directions were at right angles to each other.

A liquid crystal compound having the following formula

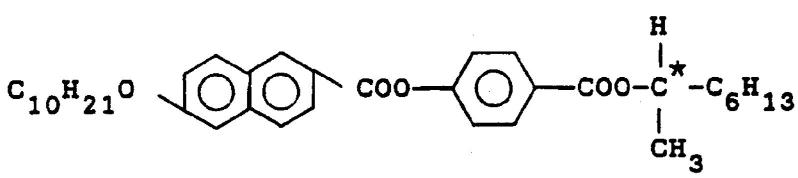

was charged into the space of the cell. The compound exhibited smectic A phase at a temperature of 60 °C or lower.

After the liquid crystal compound was charged, the cell was heated at 60 °C to bring the liquid crystal compound into a liquid. The compound was gradually cooled at a cooling rate of about 1 °C/min by temperature gradient method to thereby effect a good initial orientation of the liquid crystal material.

When an electric field was applied to the thus-obtained light modulation element in the state where the liquid crystal compound exhibited smectic A phase, there was observed induced tilt (change in the orientation direction of the major axis of the molecule).

At 45 °C, there was obtained a light (ON) state when voltage of +30V was applied, and there was obtained a dark (OFF) state when voltage of -30V was applied.

The contrast of the brightness of the light state and the dark state of the light modulation element was 24. Optical response speed at 45 °C was 25 μ seconds. The light modulation element containing fibers having the

characteristics of 3≦ℓ/d≦100 had a good initial orientation state of the liquid crystal material as well as a high response speed.

Example 3

The procedure of Example 2 was repeated except that a reflecting sheet made of aluminium was used in place of one of the polarizing plates to prepare a light modulation element (the reflecting sheet was placed on one outer side of the cell and the polarizing plate was placed on other outer side thereof).

Namely, the liquid crystal compound charged into the cell was the compound used in Example 2.

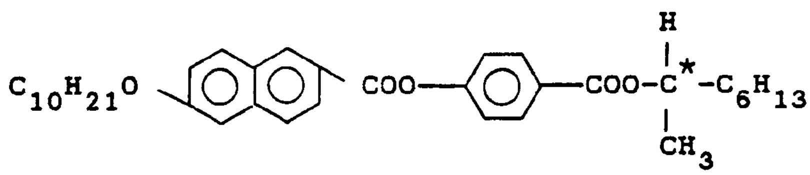

After the liquid crystal compound was charged, the cell was heated to 60 °C to bring the compound into a liquid in the same way as in Example 2. The cell was gradually cooled at a cooling rate of about 1 °C/min by temperature gradient method, thus effecting the good initial orientation of the liquid crystal material.

When an electric field was applied to the thus-obtained light modulation element in the state where the liquid crystal compound exhibited smectic A phase, there could observed induced tilt (change in the orientation direction of the major axis of the molecule).

At 45 °C, the light modulation element showed a light (ON) state when voltage of +30V was applied and a dark (OFF) state when voltage of -30V was applied.

The contrast of the brightness of the light state and the dark state of the element was 24. Optical response speed at 45 °C was 41 μ second.

The light modulation element having a polarizing plate and a reflecting sheet which reflected at least visible light exhibited a good switching contrast and had a high response speed.

Example 4

The procedure of Example 2 was repeated except that the liquid crystal cell was gradually cooled at a cooling rate of about 1 °C/min while DC of 30V was applied to the cell.

Namely, the liquid crystal compound charged into the liquid crystal cell was the compound used in Example 2.

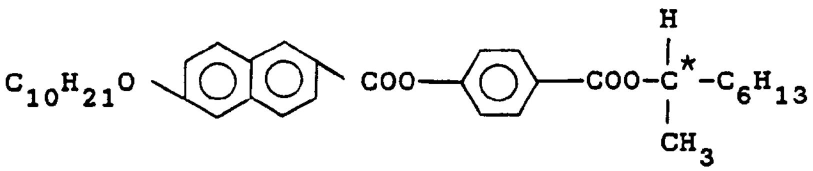

After the compound was charged, the liquid crystal cell was heated to 60 °C to bring the compound into a liquid in the same way as in Example 2.

The compound could be well initially oriented by the temperature gradient method under DC Voltage. The initial orientation ratio was 63. The initial orientation ratio was a ratio of the intensity of transmitted light (L max) when the most lightened to that of transmitted light (L min) when the most darkened, when the liquid crystal element was rotated on the rotating disc of a microscope.

When an electric field was applied to the thus-obtained light modulation element in the state where the liquid crystal compound exhibited smectic A phase, there could be observed induced tilt (change in the orientation direction of the major axis of the molecule).

At 45 °C, there was observed a light (ON) state when voltage of +30V was applied and there was observed a dark (OFF) state when voltage of -30V was applied.

Example 5

The procedure of Exmaple 2 was repeated except that the epoxy resin, the curing agent and beads (GP-20, manufactured by EHC) for controlling the space (the gap of the cell) were mixed in a ratio fo 138:30:3 by weight to prepare an epoxy resin adhesive, and that the adhesive was applied to the peripheral part of one of the substrates (on the surface of polyimide film) by means of silk screen printing in such a manner that adhesive part had eight notches $a^1$ to $a^8$ as shown in Fig. 10. The thus-prepared liquid crystal element had a space of 2 μm. A light modulation element was prepared in the same manner as in Example 2 except that the liquid crystal compound was charged into the cell through notches.

The liquid crystal compound charged into the liquid crystal cell was the compound used in Example 2.

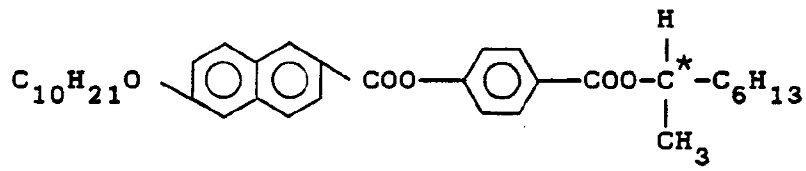

After the compound was charged into the cell through notches, the cell was heated to 60 °C to bring the compound into a liquid. The cell was gradually cooled at a cooling rate of about 1 °C/min, whereby good initial orientation of the liquid crystal material could be effected (initial orientation ratio: 16).

When an electric field was applied to the thus-obtained light modulation element in the state where the liquid crystal compound exhibited smectic A phase, there could be observed induced tilt (change in the orientation direction of the major axis of the molecule).

At 45 °C, there was observed a light (ON) state when voltage of +30V was applied, and there was observed a dark (OFF) state when voltage of -30V was applied.

The contrast of the brightness of the light state and the dark state of the light modulation element was 18. Optical response speed at 45 °C was 33 seconds.

The light modulation element having a good initial orientation ratio and a high response speed could be obtained by using the liquid crystal cell having the spacer provided with a plurality of the notches.

Example 6

The following liquid crystal compound

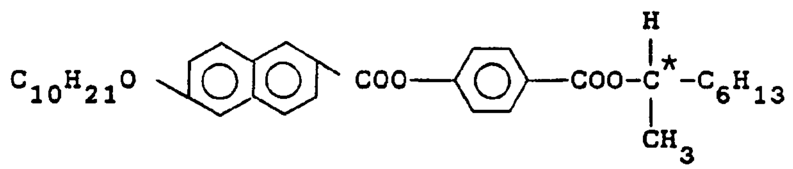

was introduced into a liquid crystal cell in which an active element was provided on the glass substrate, prepared as shown in Fig. 11.

After the introduction of the compound, the liquid crystal cell was heated to 60 °C to bring the liquid crystal compound into a liquid state. The cell was gradually cooled at a cooling rate of about 1 °C/min, whereby good initial orientation (contrast: 8) could be obtained.

When an electric field was applied to the cell in the state of smectic A phase, there could be observed induced tilt (change in the orientation direction of the major axis of the molecule). At 45 °C, there were obtained a light (ON) state at +30V and a dark (OFF) state at -30V. When two adjoining picture elements were referred to as a selective picture element and a non-selective picture element, respectively, contrast was 7.

Example 7

A liquid crystal cell was prepared in the following manner. Polyimide coating and orientation processing were conducted on one glass substrate provided with ITO transparent electrode film in the same way as in Example 2. The oblique metallization of silicon oxide was conducted on the other glass substrate provided with ITO transparent electrode film.

Two sheets of the thus-obtained glass substrates having an ability of orientating the liquid crystal were put upon each other to prepare a cell for evaluation. The surface of the polyimide film-coated glass substrate was coated with an epoxy resin adhesive by silk screen printing to bond two substrates to each other and to control the gap of the cell. The epoxy resin adhesive was used by mixing an adhesive base (LCB-304B, a product of EHC) with a curing agent (LCB-310B, a product of EHC) and bead (GP-20, a product of EHC) in a ratio of 138:30:3. The bead was used for controlling the gap of the cell. One of the two glass substrates was coated with the epoxy resin adhesive and sticked on the other substrate in such a manner that the transparent electrodes were opposed to each other. The adhesive was cured under such curing conditions that heating was conducted at 50°C for 15 minutes, at 60 °C for 15 minutes, at 70 °C for 15 minutes, at 80 °C for 15 minutes, at 125 °C for 30 minutes and at 170 °C for 60 minutes.

The thus-prepared cell having a gap of about 2 μm was interposed between two sheets of polarizing plates so arranged that polarizing directions were at right angles to each other.

The following liquid crystal

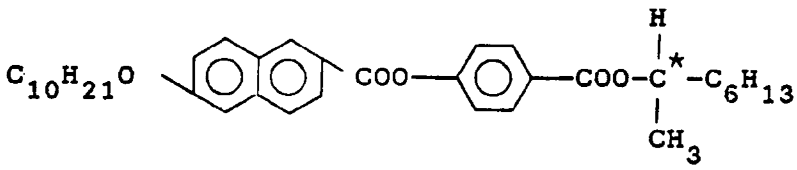

was introduced into the liquid crystal cell. After the charging of the compound, the cell was heated to 60 °C to bring the compound into a liquid state. The cell was gradually cooled at a cooling rate of about 1 °C/min, whereby good initial orientation (contrast: 7) could be obtained.

When an electric field was applied thereto in the state of smectic A phase, there could be observed induced tilt (change in the orientation direction of the major axis of the molecule). At 45 °C, there were obtained a light (ON) state at +30V and a dark (OFF) state at -30V. The contrast of the brightness of the light state and the dark state was 8. Optical response time at 45 °C was 63 μ seconds.

Accordingly, the light modulation element having the transparent substrate provided with the inorganic thin film to which an ability of orientating the liquid crystal was imparted, exhibited good initial orientation and had a high response speed.

## Claims

1. A light modulation element which comprises a liquid crystal element, the said liquid crystal element comprising a cell composed of two transparent substrates, each substrate being provided with a transparent electrode on one surface, and a liquid crystal material assuming a smectic A phase, the said substrates being arranged so that the transparent electrodes are opposed to each other and separated by a space of from 1 to 5 μm which is filled with the said liquid crystal material, the said liquid crystal material being of formula (Ia)

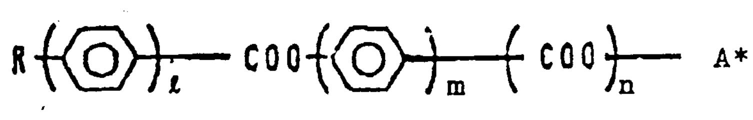

(Ia)

wherein R is alkyl, alkoxy or haloalkyl,

l is 1 or 2,

m is 0, 1 or 2,

n is 0, 1 or 2 and

A* is a group having an optically active asymmetric carbon of formula

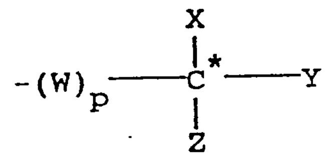

wherein X, Y and Z are different from each other and are selected from halogen, hydrogen and alkyl, W is alkylene, and p is 0 or 1, or of formula (Ic)

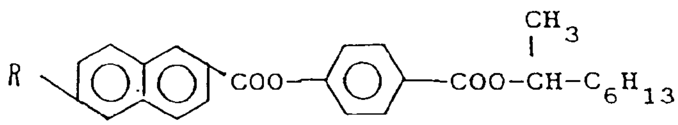 (Ic)

wherein R is $C_{10}H_{21}O$- or $C_{10}H_{21}$-.

2. A light modulation element according to claim 1 which comprises a polarizing plate placed outside at least one of the transparent substrates.

3. A light modulation element according to claim 1 or 2 wherein one or both of the transparent electrodes is provided with a thin organic or inorganic film having the potential to orientate the said liquid crystal material.

4. A light modulation element according to claim 1, 2 or 3 which comprises a second liquid crystal element and two polarizing plates, the polarizing plates being arranged such that their polarizing directions are mutually perpendicular or parallel, and the two liquid crystal elements being arranged side by side between the said polarizing plates and being sealed with a sealing material, and wherein the retardation of light transmitted through the said two liquid crystal elements is from 0.13 to 0.26 μm.

5. A light modulation element according to claim 1, 2 or 3 which comprises a polarizing plate and a reflective layer which reflects at least visible light, wherein the liquid crystal element is interposed between the said polarizing plate and the said reflective layer.

6. A light modulation element according to claim 3 wherein the cell is sealed with a sealing material and each of the transparent substrates is provided on one surface with a transparent electrode and an orientation-controlling layer in that order, the said orientation-controlling layer comprising a film of an organic high polymer having a beta-dispersion temperature not lower that the curing temperature of the said sealing material.

7. A light modulation element according to claim 2 which comprises two polarizing plates arranged such that their polarizing directions are mutually parallel or perpendicular, wherein each of the transparent substrates is provided on one surface with a transparent electrode and a ferroelectric layer in that order, and the liquid crystal element is sealed with a sealing material.

8. A light modulation element according to any one of the preceding claims wherein the width of the space between the two transparent electrodes is from 1 to 3 μm.

9. A light modulation element according to any one of the preceding claims wherein the said liquid crystal material has been initially oriented by heating the said material contained in the cell to a temperature near the upper limit for the said material to assume a smectic A phase, and applying a DC bias voltage to the material thus heated.

10. A light modulation element according to any one of the preceding claims wherein one of the transparent substrates is provided with a non-linear element or an active element.

11. A light modulation element according to any one of the preceding claims wherein m is 1 or 2 and n is 1

or 2.

**12.** A light modulation element according to any one of the preceding claims wherein one or both of the two substrates is of a flexible material.

**13.** A light modulation element according to claim 12 wherein the or each flexible substrate satisfies the following relation:

$$a^4/Et^3<0.32$$

wherein t is the thickness in mm of the flexible substrate, E is the modulus in $Kgf/m^2$ thereof and a is the width in mm of the space between the two substrates.

**Patentansprüche**

**1.** Eine Lichtmodulationsvorrichtung, die ein Flüssigkristallelement umfaßt, wobei das Flüssigkristallelement eine Zelle aus zwei transparenten Substraten, wovon jedes Substrat mit einer transparenten Elektrode auf einer Oberfläche versehen ist, und ein Flüssigkristallmaterial, das eine smektische A-Phase annimmt, umfaßt, wobei die Substrate so angeordnet sind, daß die transparenten Elektroden einander gegebenüberliegend und durch einen Zwischenraum von 1 bis 5 μm beabstandet sind, der mit dem Flüssigkristallmaterial ausgefüllt ist, wobei das Flüssigkristallmaterial der Formel (Ia) entspricht

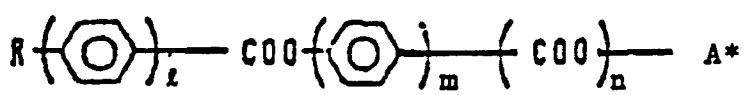

(Ia)

in der R ein Alkyl-, Alkoxy- oder Haloalkylrest ist,
l 1 oder 2 ist,
m 0, 1 oder 2 ist,
n 0, 1 oder 2 ist, und
A* eine Gruppe mit einem optisch aktiven asymmetrischen Kohlenstoff der Formel

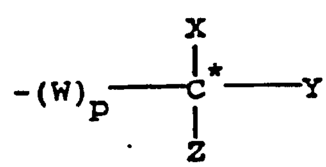

in der X, Y und Z verschieden voneinander sind und aus einem Halogen-, Wasserstoff- und Alkylrest ausgewählt sind, W ein Alkylenrest ist und p 0 oder 1 ist oder der Formel (Ic) ist

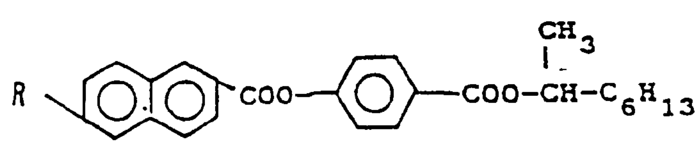

(Ic)

worin R ein $C_{10}H_{21}O$- oder ein $C_{10}H_{21}$-Rest ist.

**2.** Lichtmodulationsvorrichtung nach Anspruch 1, welche eine Polarisationsplatte, die außerhalb wenigstens einer der transparenten Substrate angeordnet ist, umfaßt.

**3.** Lichtmodulationsvorrichtung nach Anspruch 1 oder 2, worin eine oder beide der transparenten Elektroden mit einem dünnen organischen oder anorganischen Film versehen ist bzw. sind, der das Potential aufweist, das Flüssigkristallmaterial zu orientieren.

**4.** Lichtmodulationsvorrichtung nach Anspruch 1, 2 oder 3, welche ein zweites Flüssigkristallelement und

zwei Polarisationsplatten umfaßt, wobei die Polarisationsplatten so angeordnet sind, daß ihre Polarisationsrichtungen gegenseitig senkrecht oder parallel sind, und wobei die zwei Flüssigkristallelemente Seite an Seite zwischen den Polaristationsplatten angordnet sind und mit einem Dichtmaterial abgedichtet sind, und worin der Gangunterschied von durch die zwei Flüssigkristallelemente übertragenem Licht von 0,13 bis 0,26 μm beträgt.

5. Lichtmodulationsvorrichtung nach Anspruch 1, 2 oder 3, welche eine Polarisationsplatte und eine Reflexionsschicht, die wenigstens sichtbares Licht reflektiert, umfaßt, worin das Flüssigkristallelement zwischen die Polarisationsplatte und die Reflexionsschicht dazwischengeschaltet ist.

6. Lichtmodulationsvorrichtung nach Anspruch 3, worin die Zelle mit einem Dichtmaterial abgedichtet ist und jedes der transparenten Substrate auf einer Oberfläche mit einer transparenten Elektrode und einer die Orientierung kontrollierenden Schicht, in dieser Reihenfolge, versehen ist, wobei die die Orientierung kontrollierende Schicht einen Film aus einem organischen Hochpolymer mit einer β-Dispersionstemperatur umfaßt, die nicht niedriger ist, als die Aushärtungstemperatur des Dichtmaterials.

7. Lichtmodulationsvorrichtung nach Anspruch 2, welche zwei Polarisationsplatten umfaßt, die so angeordnet sind, daß ihre Polarisationsrichtungen gegenseitig parallel oder senkrecht sind, worin jedes der transparenten Substrate auf einer Oberfläche mit einer transparenten Elektrode und einer ferroelektrischen Schicht, in dieser Reihenfolge, versehen ist, und das Flüssigkristallelement mit einem Dichtmaterial abgedichtet ist.

8. Lichtmodulationsvorrichtung nach irgendeinem der vorhergehenden Ansprüche, worin die Weite des Zwischenraums zwischen den zwei transparenten Elektroden von 1 bis 3 μm beträgt.

9. Lichtmodulationsvorrichtung nach irgendeinem der vorhergehenden Ansprüche, worin das Flüssigkristallmaterial durch Erhitzen des in der Zelle enthaltenen Materiales auf eine Temperatur nahe der Obergrenze für das Material eine smektische A-Phase anzunehmen und Anwenden einer Gleichstrom-Gittervorspannung auf das so erhitzte Material anfangsorientiert wurde.

10. Lichtmodulationsvorrichtung nach irgendeinem der vorhergehenden Ansprüche, worin eines der transparenten Substrate mit einem nicht-linearen Element oder einem aktiven Element versehen ist.

11. Lichtmodulationsvorrichtung nach irgendeinem der vorhergehenden Ansprüche, worin m 1 oder 2 ist oder n 1 oder 2 ist.

12. Lichtmodulationsvorrichtung nach irgendeinem der vorhergehenden Ansprüche, worin eines oder beide der zwei Substrate aus einem flexiblen Material bestehen.

13. Lichtmodulationsvorrichtung nach Anspruch 12, worin das oder jedes flexible Substrat die folgende Beziehung erfüllt:

$$a^4/Et^3 < 0,32,$$

worin t die Dicke in mm des flexiblen Substrates, E das Modul in $kgf/m^2$ und a die Weite in mm des Zwischenraumes zwischen den zwei Substraten sind.

## Revendications

1. Dispositif de modulation de la lumière, constitué d'un dispositif à cristaux liquides, ledit dispositif à cristaux liquides étant formé d'une cellule composée de deux substrats transparents, chaque substrat étant muni, sur une surface, d'une électrode transparente et d'un matériau à cristaux liquides de phase smectique A, lesdits substrats étant organisés de façon à ce que les électrodes transparentes soient face à face et séparées par un espace de 1 à 5 μm rempli d'un matériau à cristaux liquides, ledit matériau à cristaux liquides répondant à la formule (Ia)

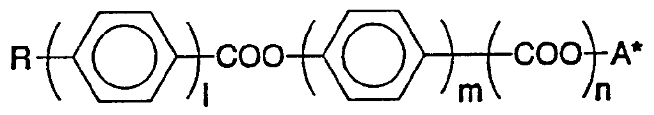

(Ia)

dans laquelle R représente un groupe alkyle, alcoxy ou halogénoalkyle,

l vaut 1 ou 2,

m vaut 0, 1 ou 2,

n vaut 0, 1 ou 2 et

A* représente un groupe possédant un carbone asymétrique optiquement actif répondant à la formule

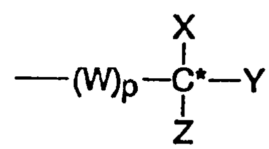

dans laquelle X, Y et Z sont différents les uns des autres et sont choisis parmi un atome d'halogène, un atome d'hydrogène et un groupe alkyle, W représente un groupe alkylène, et p vaut 0 ou 1, ou répondant à la formule (Ic)

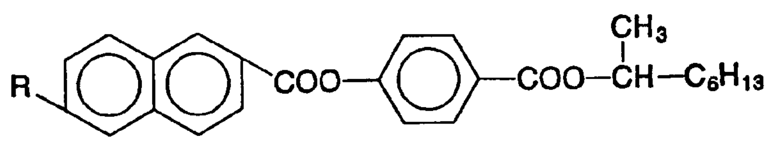

(Ic)

dans laquelle R représente $C_{10}H_{21}O$- ou $C_{10}H_{21}$-.

**2.** Dispositif de modulation de la lumière conforme à la revendication 1, comprenant une plaque polarisante placée à l'extérieur d'au moins un des substrats transparents.

**3.** Dispositif de modulation de la lumière conforme aux revendications 1 ou 2, dans lequel une des deux ou les deux électrodes transparentes sont munies d'un fin film organique ou inorganique capable d'orienter ledit matériau à cristaux liquides.

**4.** Dispositif de modulation de la lumière conforme aux revendications 1, 2 ou 3, constitué d'un second dispositif à cristaux liquides et de deux plaques polarisantes, ces dernières étant disposées de telle sorte que leurs directions de polarisation soient parallèles ou perpendiculaires entre elles, et les deux dispositifs à cristaux liquides étant disposés côte à côte entre les deux plaques polarisantes et scellés à l'aide d'un matériau d'étanchéité, et pour lequel l'effet retardateur sur la lumière transmise à travers les deux dispositifs à cristaux liquides est compris entre 0,13 et 0,26 µm.

**5.** Dispositif de modulation de la lumière conforme aux revendications 1, 2 ou 3, qui comprend une plaque polarisante et une couche réfléchissante qui réfléchit au moins la lumière visible, dans lequel le dispositif à cristaux liquides est intercalé entre ladite plaque polarisante et ladite couche réfléchissante.

**6.** Dispositif de modulation de la lumière conforme à la revendication 3, pour lequel la cellule est scellée à l'aide d'un matériau d'étanchéité et chacun des substrats transparents est muni, sur une surface, d'une électrode transparente et d'une couche de régulation de l'orientation, placées dans cet ordre, ladite couche de régulation de l'orientation étant constituée d'un film de polymère organique de forte masse moléculaire ayant une température de dispersion bêta qui n'est pas inférieure à la température de durcissement dudit adhésif.

**7.** Dispositif de modulation de la lumière conforme à la revendication 2, comprenant deux plaques polarisantes disposées de sorte que leurs directions de polarisation soient parallèles ou perpendiculaires entre

elles, pour lequel chacun des substrats transparents est muni, sur une surface, d'une électrode transparente et d'une couche férroélectrique dans cet ordre, et le dispositif à cristaux liquide étant scellé à l'aide d'un adhésif.

8. Dispositif de modulation de la lumière conforme à une quelconque des revendications précédentes, dans lequel la largeur de l'espace entre les deux électrodes transparentes est comprise entre 1 et 3 μm.

9. Dispositif de modulation de la lumière conforme à une quelconque des revendications précédentes, dans lequel ledit matériau à cristaux liquides a subi une orientation préalable en chauffant ledit matériau contenu dans la cellule à une température proche de la limite supérieure à laquelle ledit matériau forme une phase smectique A et en appliquant au matériau ainsi chauffé une tension de polarisation en courant continu.

10. Dispositif de modulation de la lumière conforme à une quelconque des revendications précédentes, dans lequel un des substrats transparent est muni d'un élément de circuit à caractéristiques non-linéaires ou d'un élément de circuit actif.

11. Dispositif de modulation de la lumière conforme à une quelconque des revendications précédentes, dans lequel m vaut 1 ou 2 et n vaut 1 ou 2.

12. Dispositif de modulation de la lumière conforme à une quelconque des revendications précédentes, dans lequel un des deux substrats ou les deux substrats sont constitués d'un matériau flexible.

13. Dispositif de modulation de la lumière conforme à la revendication 12, dans lequel le ou les matériaux flexibles doivent satisfaire à la relation suivante :

$$a^4/Et^3 < 0,32$$

dans laquelle t représente l'épaisseur du substrat flexible, exprimée en mm, E représente le module en $kgf/m^2$ et a représente la largeur de l'espace entre les deux substrats, exprimée en mm.

FIG. 1

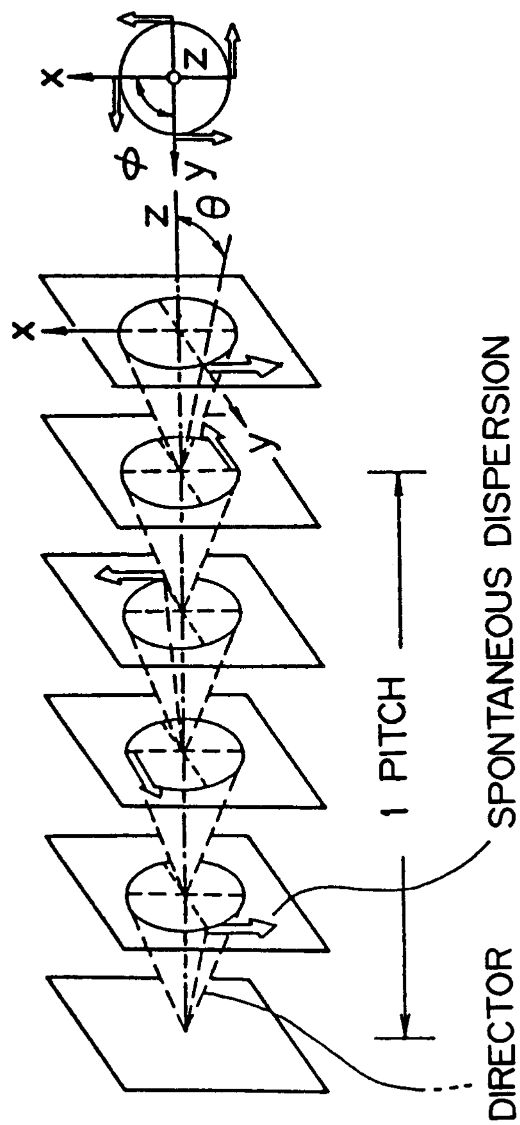


FIG. 2

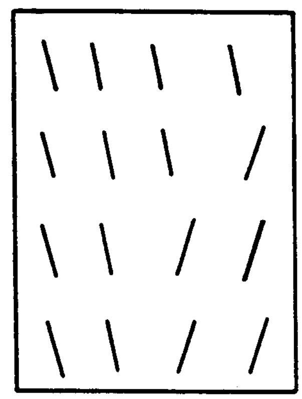

FIG. 3

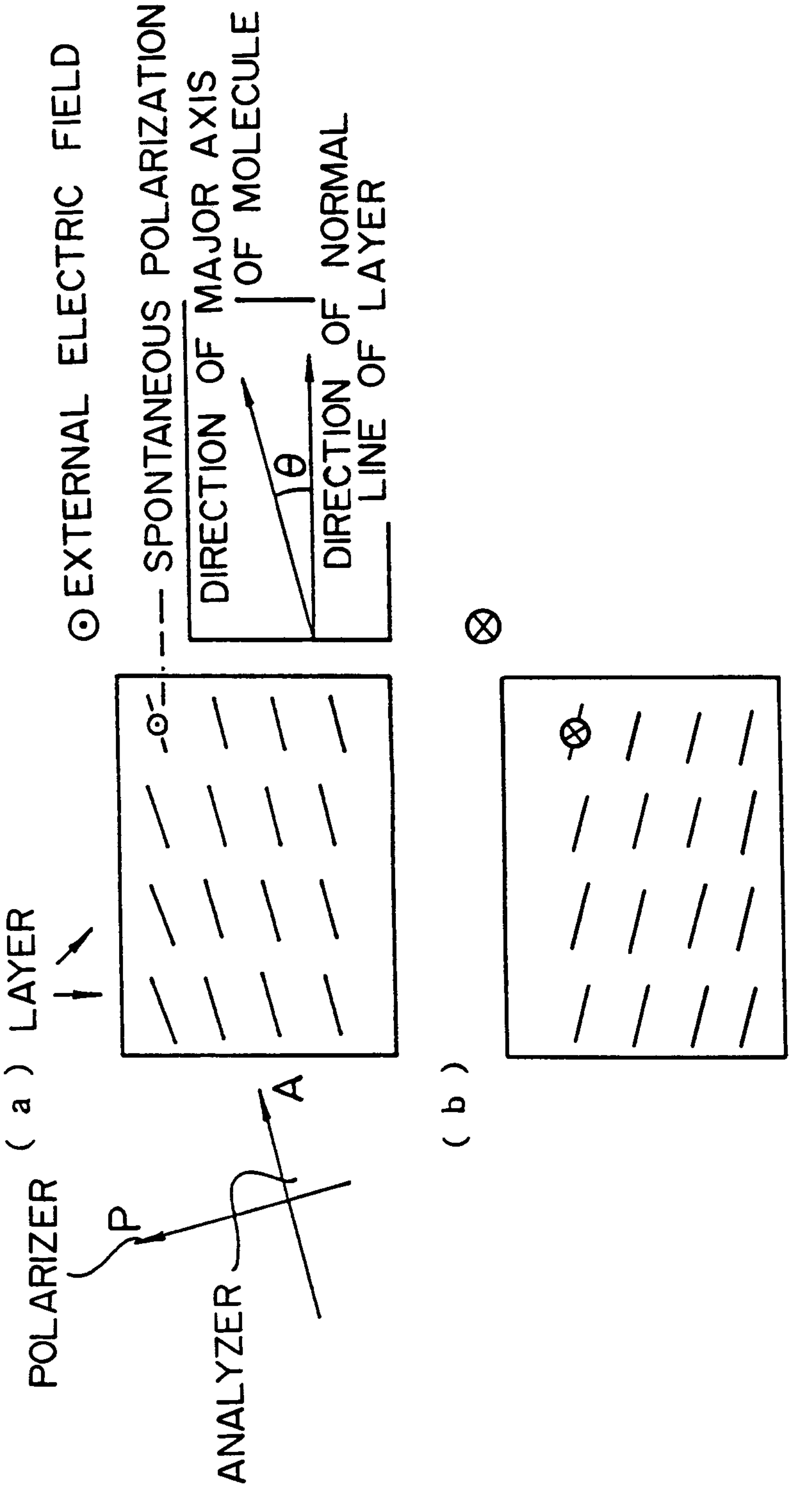
EXTERNAL ELECTRIC FIELD
SPONTANEOUS POLARIZATION
DIRECTION OF MAJOR AXIS OF MOLECULE
θ
DIRECTION OF NORMAL LINE OF LAYER
LAYER
(a)
(b)
POLARIZER
P
ANALYZER
A

F I G. 4

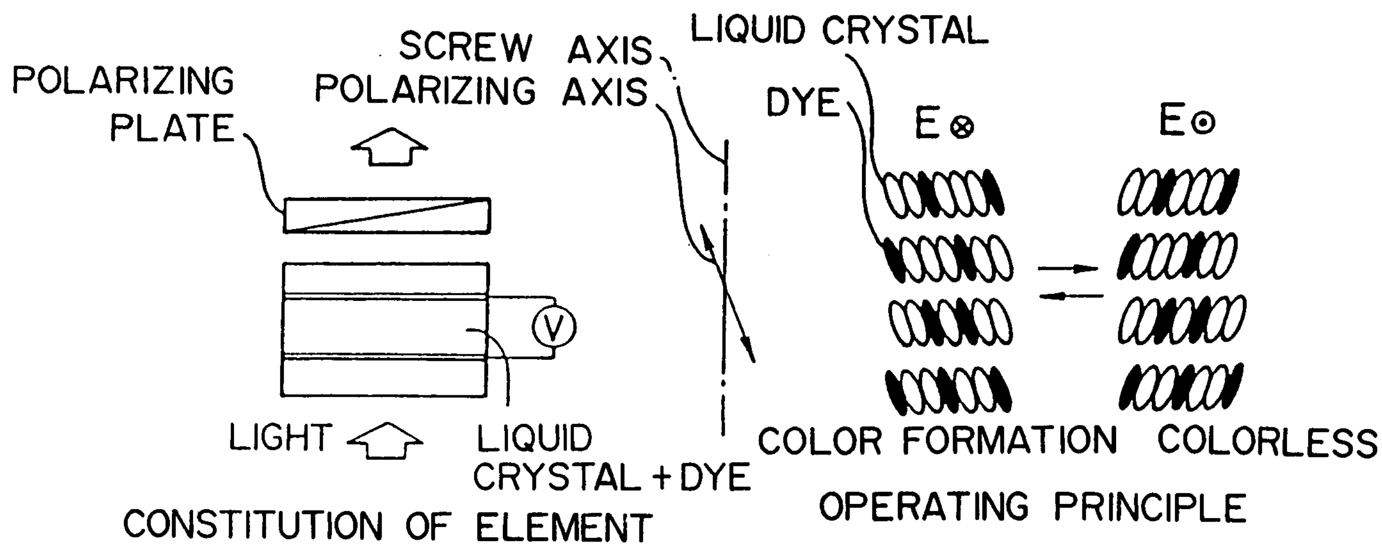
POLARIZING
PLATE
SCREW AXIS
POLARIZING AXIS
LIQUID CRYSTAL
DYE
E⊗
E⊙
LIGHT
LIQUID
CRYSTAL + DYE
COLOR FORMATION
COLORLESS
CONSTITUTION OF ELEMENT
OPERATING PRINCIPLE

F I G. 5

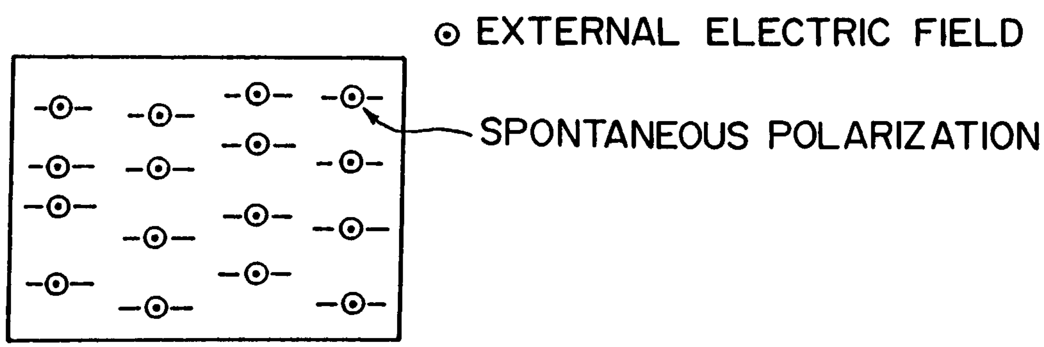
⊙ EXTERNAL ELECTRIC FIELD
SPONTANEOUS POLARIZATION

FIG. 6

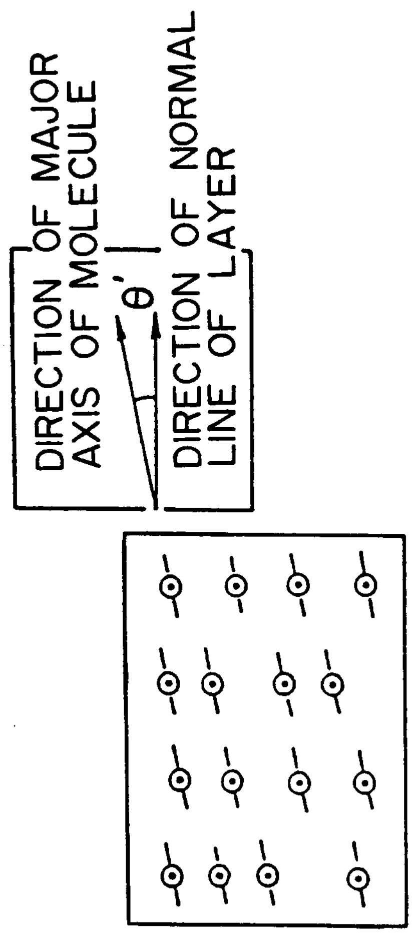
DIRECTION OF MAJOR
AXIS OF MOLECULE
θ'
DIRECTION OF NORMAL
LINE OF LAYER

FIG. 7

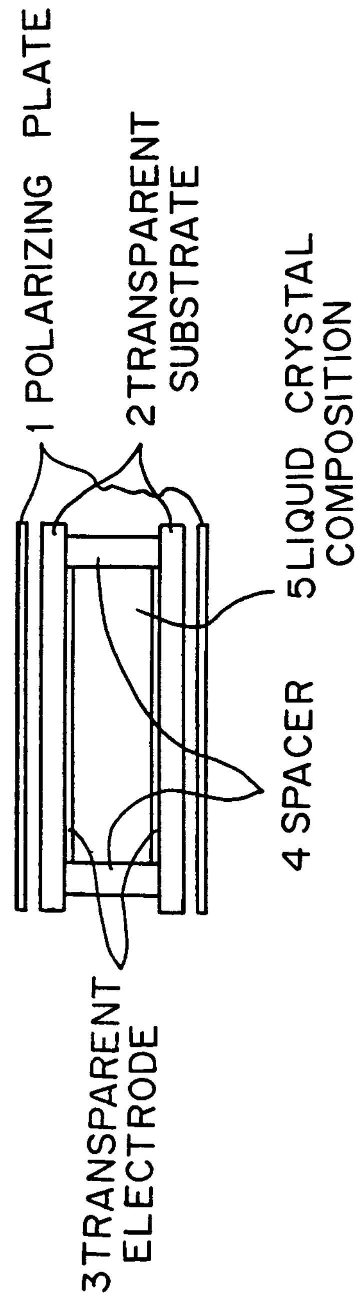
1 POLARIZING PLATE
2 TRANSPARENT
SUBSTRATE
5 LIQUID CRYSTAL
COMPOSITION
4 SPACER
3 TRANSPARENT
ELECTRODE

FIG. 8

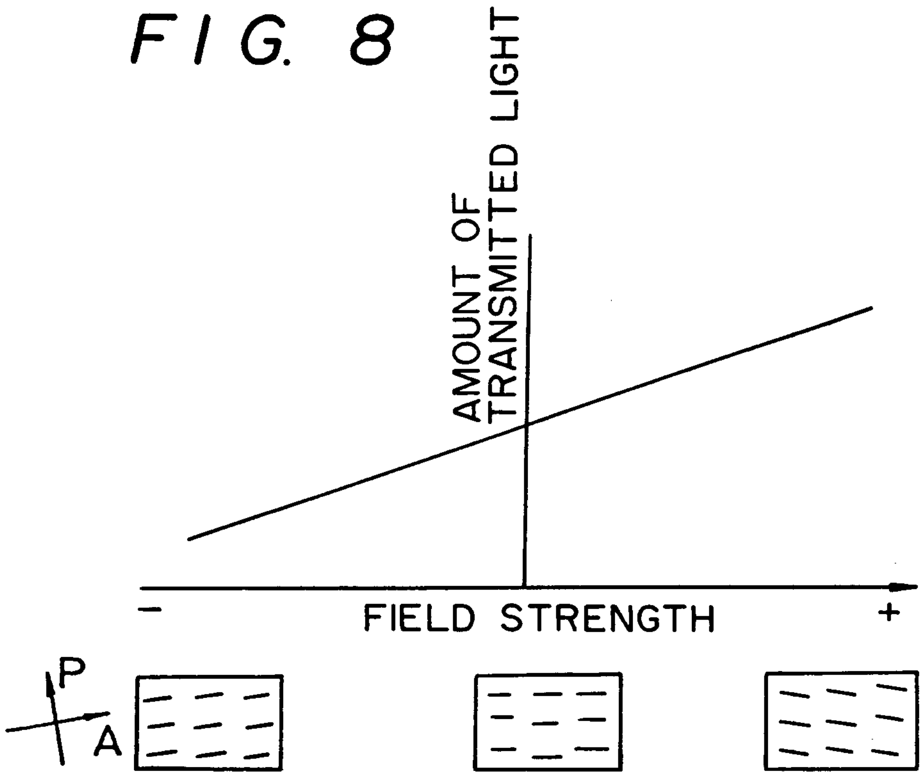
AMOUNT OF
TRANSMITTED LIGHT
-
FIELD STRENGTH
+
P
A

FIG. 9

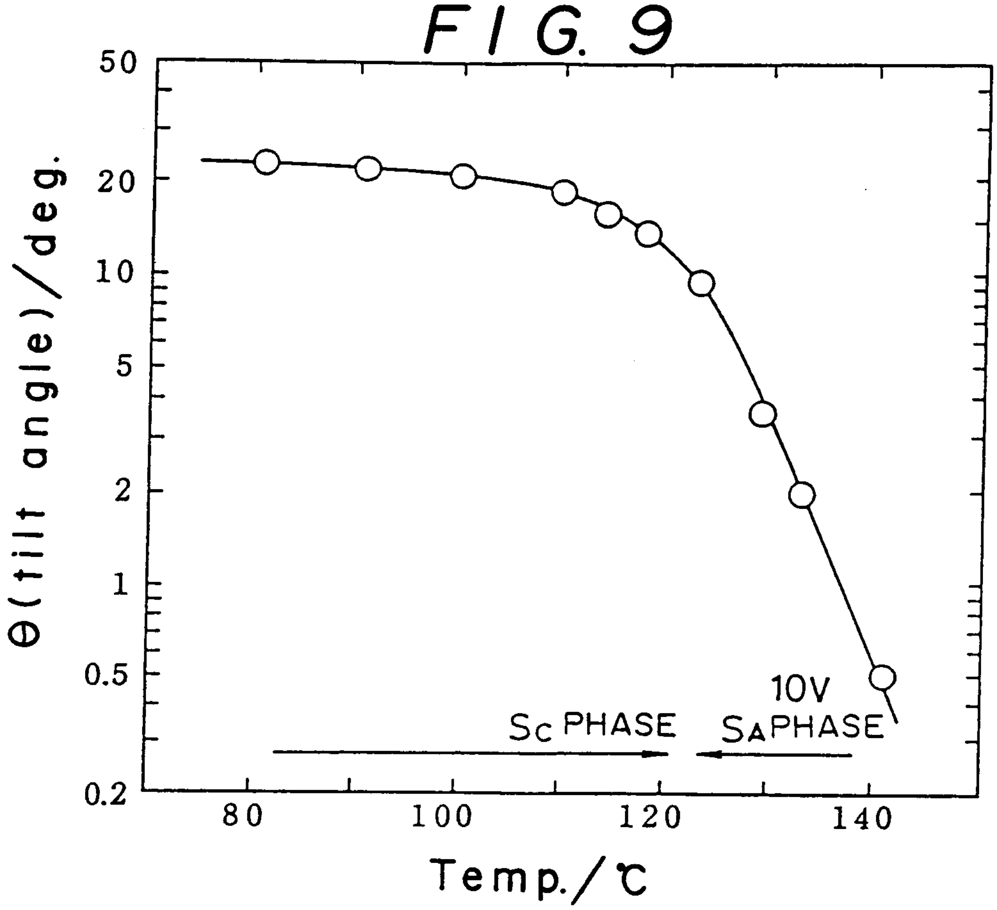
50
20
10
5
2
1
0.5
0.2
θ(tilt angle)/deg.
80
100
120
140
Temp./℃
10V
Sc PHASE
SA PHASE

FIG. 10

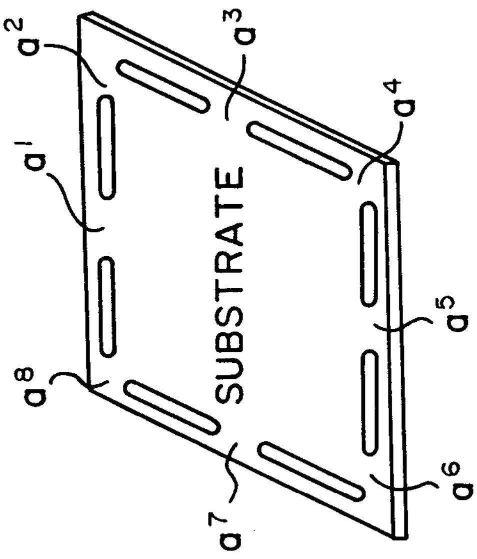
SUBSTRATE
a1
a2
a3
a4
a5
a6
a7
a8

FIG. 11

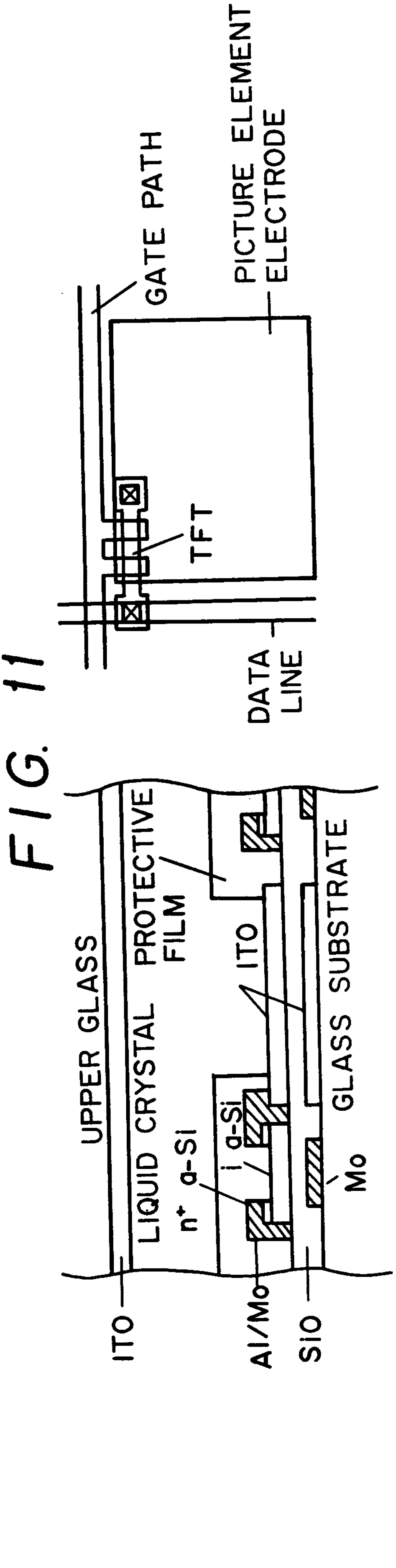
GATE PATH
PICTURE ELEMENT ELECTRODE
TFT
DATA LINE
UPPER GLASS
LIQUID CRYSTAL
PROTECTIVE FILM
ITO
n+ a-Si
i a-Si
GLASS SUBSTRATE
Mo
ITO
Al/Mo
SiO

FIG. 12

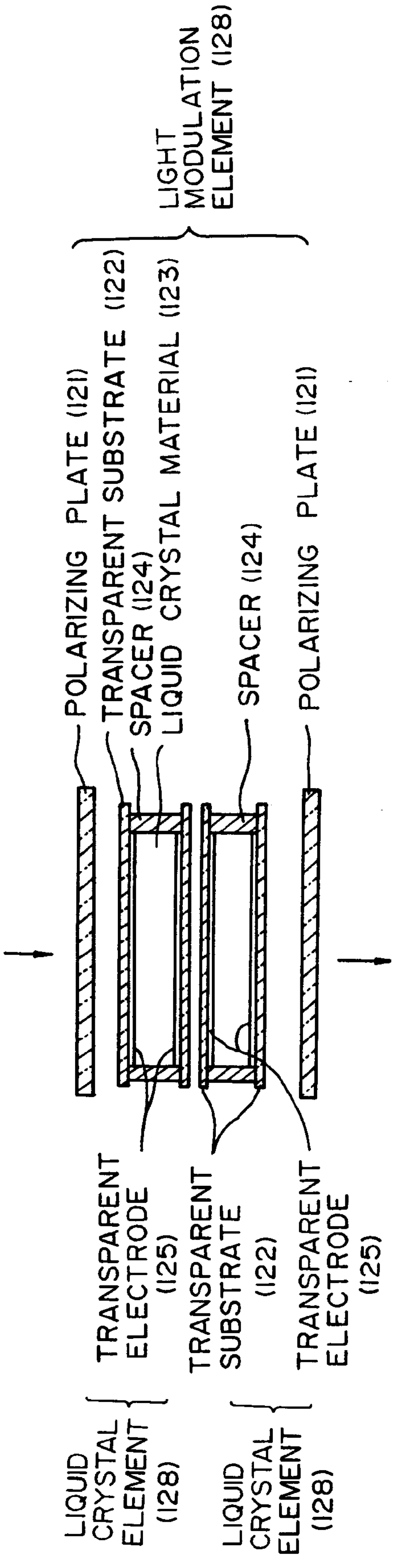
LIGHT
POLARIZING PLATE (121)
TRANSPARENT SUBSTRATE (122)
SPACER (124)
LIQUID CRYSTAL MATERIAL (123)
SPACER (124)
POLARIZING PLATE (121)
LIGHT MODULATION ELEMENT (128)
TRANSPARENT ELECTRODE (125)
TRANSPARENT SUBSTRATE (122)
TRANSPARENT ELECTRODE (125)
LIQUID CRYSTAL ELEMENT (128)
LIQUID CRYSTAL ELEMENT (128)

FIG. 13

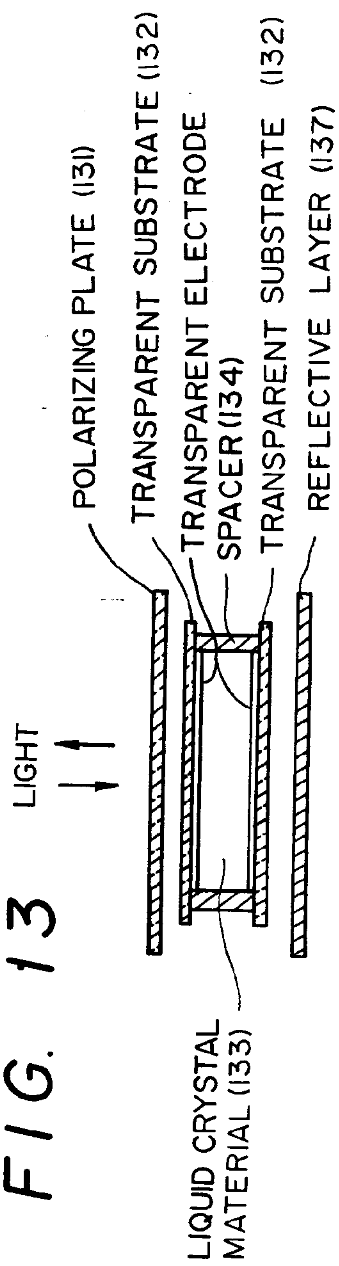
LIGHT
POLARIZING PLATE (131)
TRANSPARENT SUBSTRATE (132)
TRANSPARENT ELECTRODE
SPACER (134)
TRANSPARENT SUBSTRATE (132)
REFLECTIVE LAYER (137)
LIQUID CRYSTAL MATERIAL (133)

FIG. 14

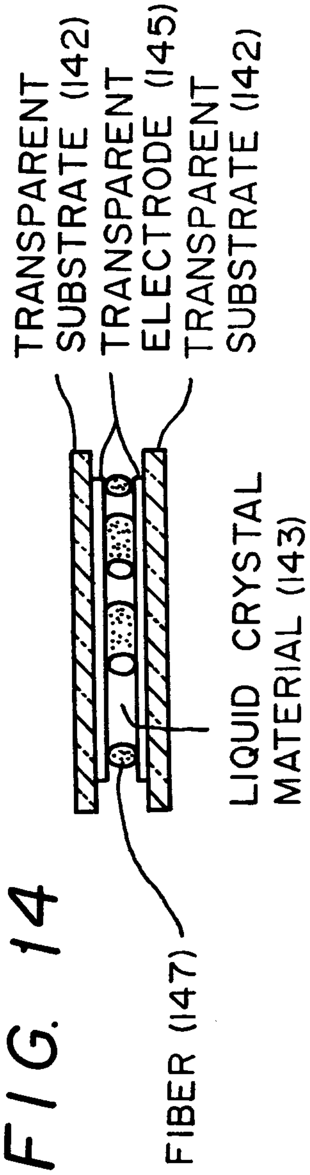
TRANSPARENT SUBSTRATE (142)
TRANSPARENT ELECTRODE (145)
TRANSPARENT SUBSTRATE (142)
LIQUID CRYSTAL MATERIAL (143)
FIBER (147)

FIG. 15

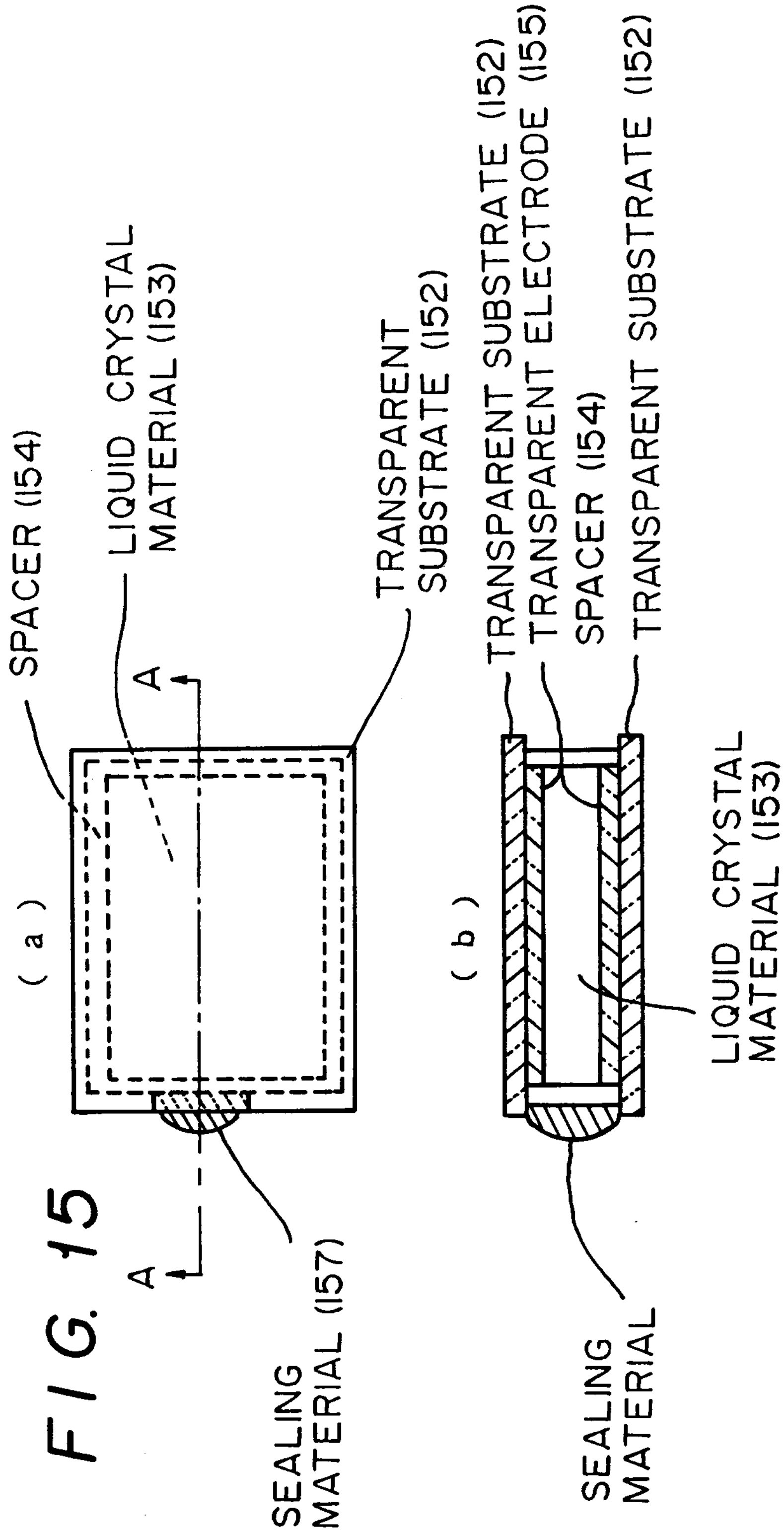
( a )
SPACER (154)
LIQUID CRYSTAL MATERIAL (153)
TRANSPARENT SUBSTRATE (152)
A
A
SEALING MATERIAL (157)
( b )
TRANSPARENT SUBSTRATE (152)
TRANSPARENT ELECTRODE (155)
SPACER (154)
TRANSPARENT SUBSTRATE (152)
LIQUID CRYSTAL MATERIAL (153)
SEALING MATERIAL

FIG. 16

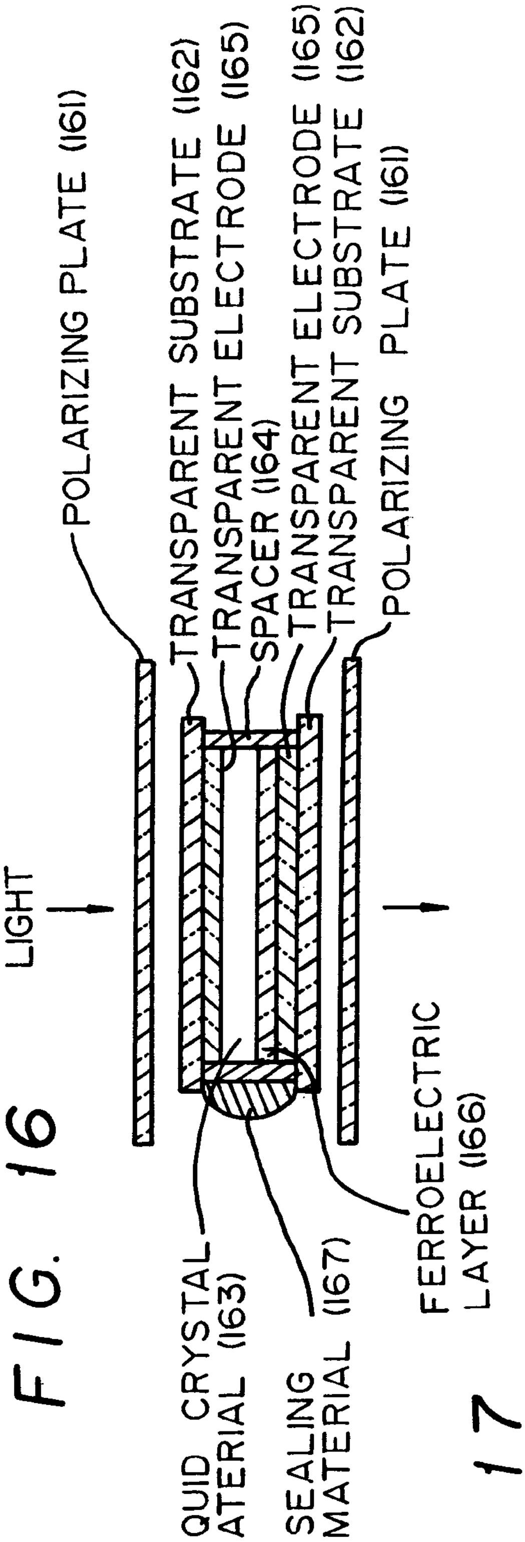


FIG. 17 (a)

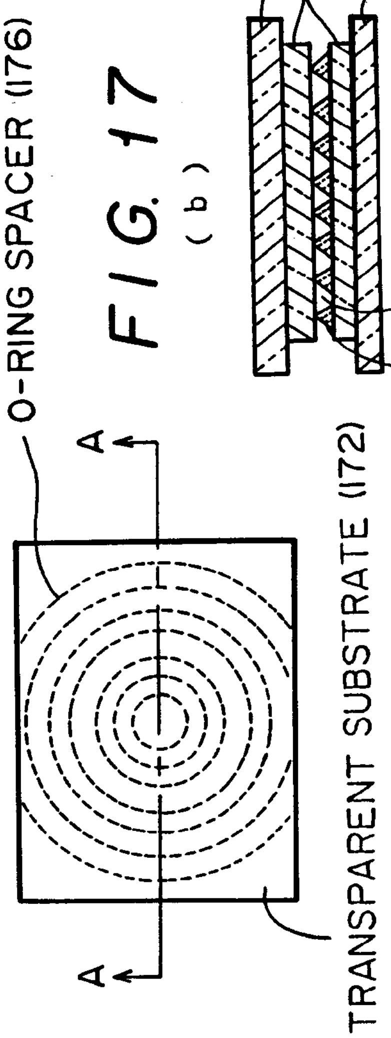


FIG. 17 (b)

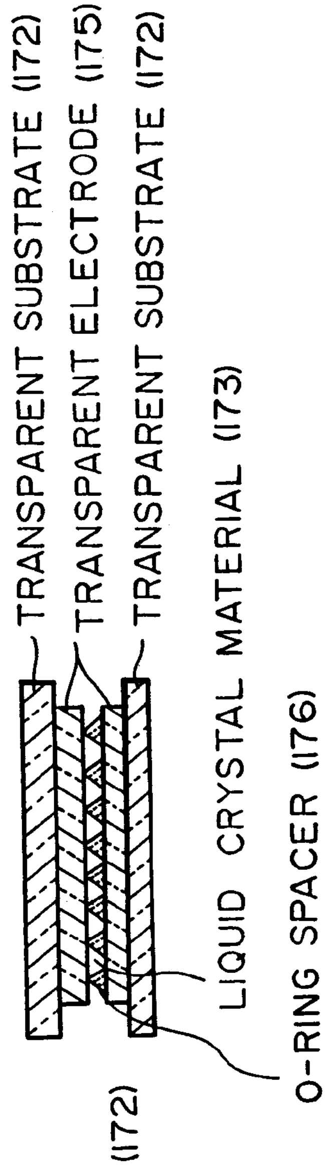

FIG. 18

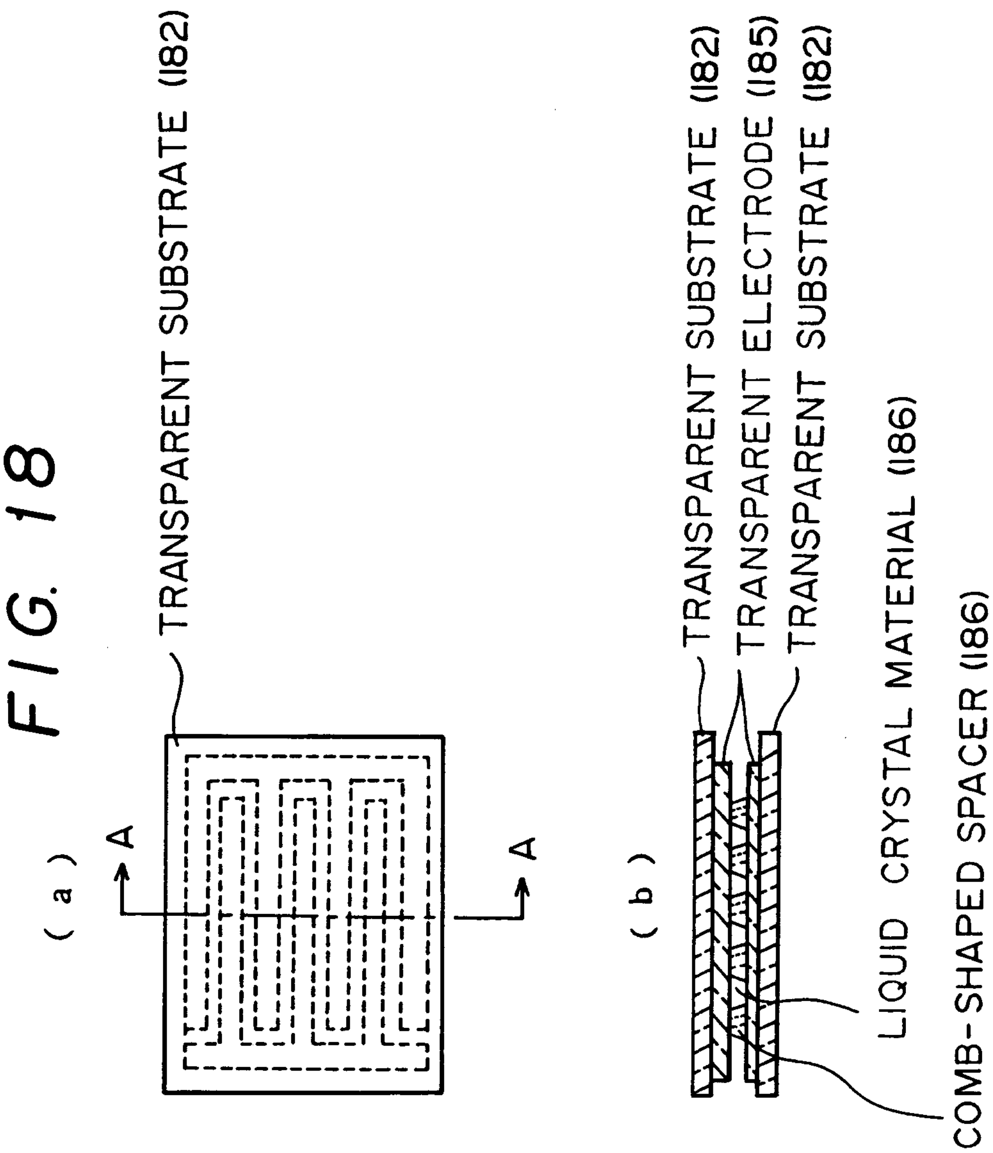
(a)
A
A
TRANSPARENT SUBSTRATE (182)
(b)
TRANSPARENT SUBSTRATE (182)
TRANSPARENT ELECTRODE (185)
TRANSPARENT SUBSTRATE (182)
LIQUID CRYSTAL MATERIAL (186)
COMB-SHAPED SPACER (186)